# EUROPÄISCHE PATENTSCHRIFT

(11) **EP 1 591 424 B1**
(45) Veröffentlichungstag und Bekanntmachung des Hinweises auf die Patenterteilung: **22.06.2011**
(21) Anmeldenummer: 04010152.9
(22) Anmeldetag: 29.04.2004
(51) Int. Cl.: C02F 3/12

(54) **Biologische Klärvorrichtung**
Biological waste water treatment plant
Station d'épuration biologique

(43) Veröffentlichungstag der Anmeldung: 02.11.2005
(73) Patentinhaber: Baumann, Markus, 32602 Vlotho (DE)
(72) Erfinder: Baumann, Markus, 32602 Vlotho (DE)
(74) Vertreter: TER MEER - STEINMEISTER & PARTNER GbR

(56) Entgegenhaltungen:
- EP-A- 1 388 524
- DE-U- 20 302 765
- PATENT ABSTRACTS OF JAPAN Bd. 2002, Nr. 05, 3. Mai 2002 (2002-05-03) & JP 2002 013651 A (TSUTSUNAKA SHEET BOSUI KK), 18. Januar 2002 (2002-01-18)

## Beschreibung

Die Erfindung betrifft eine biologische Klärvorrichtung mit den Merkmalen des Oberbegriffs des Anspruchs 1.

Eine derartige Klärvorrichtung wird beispielsweise in der EP 1 388 524 offenbart. In dieser Anlage wird eine einzige Tauchpumpe für die Belüftung des Belebungsbeckens und für die Schlammrückführung und die Klarwasserentlehrung verwendet. Hierzu ist eine Anzahl unabhängig voneinander schaltbarer Ventile in den einzelnen Leitungen vorgesehen.

Ferner offenbart Dokument JP-A-2002013651 die Verwendung eines Kugelventils als Rückschlagventil bei der Belüftung von Kleinkläranlagen.

Kleinkläranlagen enthalten in der Regel eine Anzahl von Pumpen, zu denen eine Klarwasser-Entnahmepumpe, eine Schlammpumpe, ein Belüfter, etc. gehören. Darüber hinaus können weitere Pumpen vorgesehen sein, die das Abwasser während des Klärvorgangs transportieren und behandeln, z. B. belüften.

Eine große Anzahl von Pumpen führt nicht nur zu erheblichen Kosten für die Pumpen selbst, sondern darüber hinaus zu weiteren Ausgaben für die Verkabelung der Pumpen und deren Steuerung. Die Anlagen werden insgesamt teurer, komplizierter und verschleißanfälliger.

Der Erfindung liegt daher die Aufgabe zugrunde, eine Klärvorrichtung der obigen Art zu schaffen, die einen verringerten apparativen Aufwand erfordert.

Zur Lösung dieser Aufgabe ist die erfindungsgemäße Klärvorrichtung durch die Merkmale des Anspruchs 1 gekennzeichnet.

Hier ist eine Pumpe vorgesehen, die zwei Funktionen wahrnimmt. Eine Pumpe mit Zubehör kann eingespart werden. Dabei ist der Verteiler vorzugsweise so ausgebildet, dass er eine relativ genaue Dosierung, insbesondere des Nebenstroms zuläßt. Unter diesen Voraussetzungen kann die Erfindung beispielsweise so eingesetzt werden, dass die Schlammrückführung in die Vorklärkammer, die nur von Zeit zu Zeit und mit relativ geringen Wasser/Schlamm-Mengen erfolgen muß, durch den Nebenstrom realisiert wird.

Die Schlammrückführung ist eine Maßnahme, die bei Belebtschlamm-Klärvorgängen eingesetzt wird und durch die das in die Absetzkammer oder Vorklärkammer zuströmende frische Abwasser mit Schlamm versorgt wird, in dem sich bereits Mikroorganismen gebildet haben.

Die Dosierung des Nebenstroms kann auf verschiedene Weise erfolgen. Es können Ventile vorgesehen sein, die beispielsweise zu Beginn oder am Ende der Pumpenlaufzeit eine bestimmte, begrenzte Wassermenge hindurchlassen.

Als Hauptaufgabe kann die erfindungsgemäße Pumpe beispielsweise das Wasser der Klärkammer durch einen Venturi-Belüfter hindurchpumpen. Es kommen aber auch andere Pumpaufgaben in Betracht.

Ein geeignetes Ventil, das es in einfacher Weise ermöglicht, eine dosierte, relativ geringe Wassermenge in die Nebenleitung abzugeben, umfaßt beispielsweise eine zwischen zwei Ventilsitzen in einem ansteigenden Abschnitt der Nebenleitung bewegliche Ventilkugel. Beim Einschalten der Pumpe wird die Ventilkugel vom unteren Sitz abgehoben und mit dem Wasserstrom in Richtung des oberen Ventilsitzes bewegt. In dieser Zeit kann Wasser an der Ventilkugel vorbei in die Nebenleitung strömen, bis die Kugel gegen den oberen Ventilsitz trifft und hier durch den anstehenden Wasserdruck festgehalten wird. Wenn die Pumpe abgeschaltet wird, sinkt die Kugel wieder auf den unteren Ventilsitz zurück. Es handelt sich also um eine Lösung, bei der am Anfang des Pumpenbetriebs eine begrenzte, dosierte Wassermenge in die Nebenleitung gelangt.

Ein Ventil dieser Art kann durch ein vorgeschaltetes oder nachgeschaltetes Rückschlagventil ergänzt werden.

Eine andere Ausführungsform eines geeigneten Ventils kann wiederum eine Ventilkugel umfassen, die zwischen zwei Ventilsitzen an einer Ausgangsleitung der Pumpe einerseits und der Nebenleitung andererseits hin und her beweglich ist und die in einem ansteigenden Abschnitt der Hauptleitung einen Wasserspeicher aufweist. Wird die Pumpe eingeschaltet, so wird die Kugel gegen den Ventilsitz an der Nebenleitung angehoben und die Nebenleitung verschlossen.

Das Wasser gelangt in die Hauptleitung und hier in den Wasserspeicher. Wird die Pumpe abgeschaltet, so fällt die Kugel zurück auf den Ventilsitz an der Ausgangsleitung der Pumpe. Das in dem Wasserspeicher gesammelte Wasser strömt zurück in die jetzt offene Nebenleitung.

Diese Ventiltypen stehen lediglich als Beispiel für zahlreiche andere Möglichkeiten.

Im folgenden werden bevorzugte Ausführungsbeispiele der Erfindung anhand der beigefügten Zeichnung näher erläutert.
- Fig. 1a und 1b: zeigen eine erste Ausführungsform eines erfindungsgemäß für die Nebenleitung vorgesehenen Ventils in verschiedenen Betriebsstellungen;
- Fig. 2a bis 2c: zeigen eine zweite Ausführungsform eines Ventils in entsprechender Darstellung;
- Fig. 3a bis 3e: zeigen eine dritte Ausführungsform eines erfindungsgemäßen Ventils;
- Fig. 4a und 4b: zeigen eine vierte Ausführungsform eines Ventils.

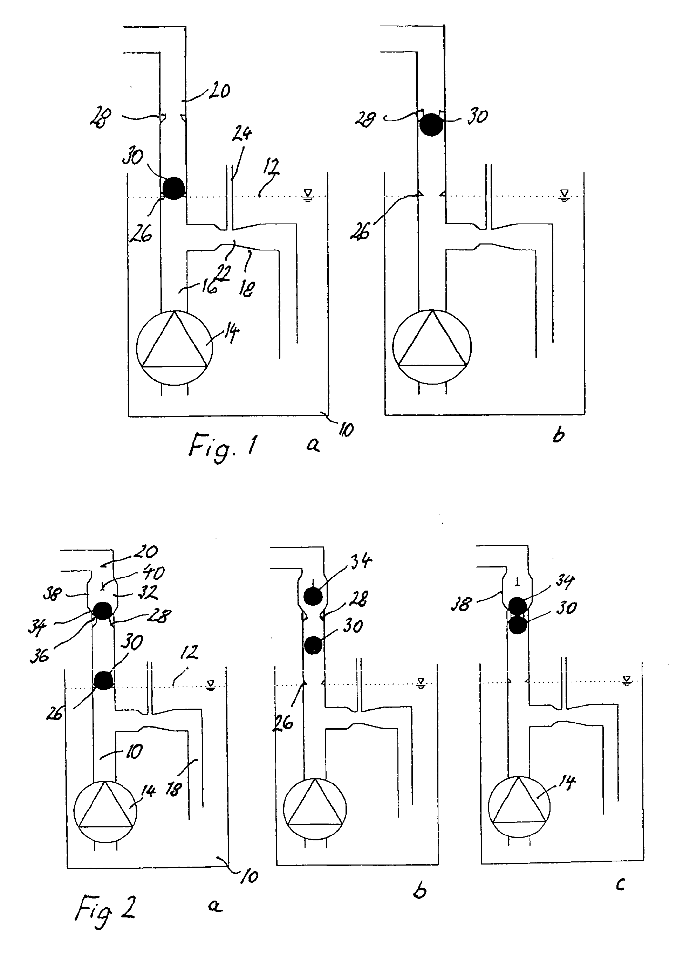

Fig. 1a zeigt schematisch eine Klärkammer 10, in der sich mehr oder weniger geklärtes Abwasser bis zu einem Wasserspiegel 12 befinden. Innerhalb der Klärkammer 10 befindet sich eine Pumpe 14, von der eine Pumpenausgangsleitung 16 ausgeht, die sich alsbald in eine Hauptleitung 18 und eine Nebenleitung 20 verzweigt. Bei dem dargestellten Beispiel wird die Hauptleitung einem Venturibelüfter 22 zugeführt, in dessen Venturi-Engstelle eine Luftleitung 24 eintritt.

In einem ansteigenden Abschnitt der Nebenleitung 20 befinden sich in Abstand zueinander zwei einander zugekehrte Ventilsitze 26,28, zwischen denen eine Kugel 30 aufwärts und abwärts beweglich ist.

Wenn die Pumpe 14 eingeschaltet wird, wird die Ventilkugel 30 nach und nach vom unteren Ventilsitz 26 abgehoben, bis sie gegen den oberen Ventilsitz 28 trifft. Bei diesem Aufstieg der Kugel strömt Wasser an der Kugel vorbei durch die Nebenleitung 20. Dieser Wasserstrom wird beendet, sobald die Kugel gegen den oberen Ventilsitz 28 trifft. In dieser Stellung wird sie durch den Wasserdruck gehalten, solange die Pumpe 14 läuft. Wenn die Pumpe 14 abgeschaltet wird, fällt die Ventilkugel 30 auf den unteren Ventilsitz 26 zurück.

Beim nächsten Einschalten der Pumpe wiederholt sich der Vorgang. Dies bietet die Möglichkeit, von Zeit zu Zeit begrenzte Mengen schlammhaltigen Wassers über die Nebenleitung 20 in die nicht dargestellte Vorklärkammer zurückzupumpen, ohne dass hierfür eine gesonderte Pumpe benötigt wird.

Fig. 2a bis 2c zeigen eine andere Ausführungsform der Erfindung. Diese Ausführungsform basiert auf der Ausführungsform gemäß Fig. 1a und 1b, enthält jedoch zusätzlich ein Rückschlagventil. Bauteile, die bereits im Zusammenhang mit Fig. 1 erläutert worden sind, tragen die entsprechenden Bezugsziffern. Vorgesehen ist in Fig. 2a bis 2c auch die bereits in Fig. 1 gezeigte Ventilkugel 30, die zwischen dem unteren Ventilsitz 26 und dem oberen Ventilsitz 28 in der bereits geschilderten Weise beweglich ist.

Stromabwärts der Anordnung der Ventilkugel 30 mit den beiden Ventilsitzen 26,28 ist ein Rückschlagventil 32 vorgesehen. Im dargestellten Fall ist das Rückschlagventil als Kugelventil ausgebildet. Es umfaßt eine Ventilkugel 34, die sich in Richtung stromaufwärts gegen einen Ventilsitz 36 anlegen kann und auf diese Weise einen Rückstrom verhindert. Die Ventilkugel 34 befindet sich innerhalb einer leicht erweiterten Kammer 38, in der eine Kugel-Stütze 40 angeordnet ist, gegen die sich die Kugel bei geöffneter Stellung des Rückschlagventils anlegt (Fig. 2c).

Anschließend soll die Funktionsweise dieses Ventils erläutert werden.

Fig. 2a zeigt die Stellung, in der die Pumpe 14 ausgeschaltet ist. Wenn die Pumpe 14 eingeschaltet wird (Fig. 2b), wird die Ventilkugel 30 nach und nach angehoben. Die Ventilkugel 30 weist, wie bereits erwähnt, einen geringen Abstand zu den Wänden der Nebenleitung auf, so dass Wasser an der Ventilkugel 30 vorbei aufsteigen kann. Dieser Wasserstrom hebt die Ventilkugel 34 des Rückschlagventils 32 von dessen Ventilsitz 36 ab und drückt die Kugel gegen die Stütze 40. Wenn die Ventilkugel 30 gegen den oberen Ventilsitz 28 trifft (Fig. 2c), wird der aufsteigende Wasserstrom unterbrochen. Die Ventilkugel 34 des Rückschlagventils 32 sinkt auf ihren Ventilsitz 36 herab.

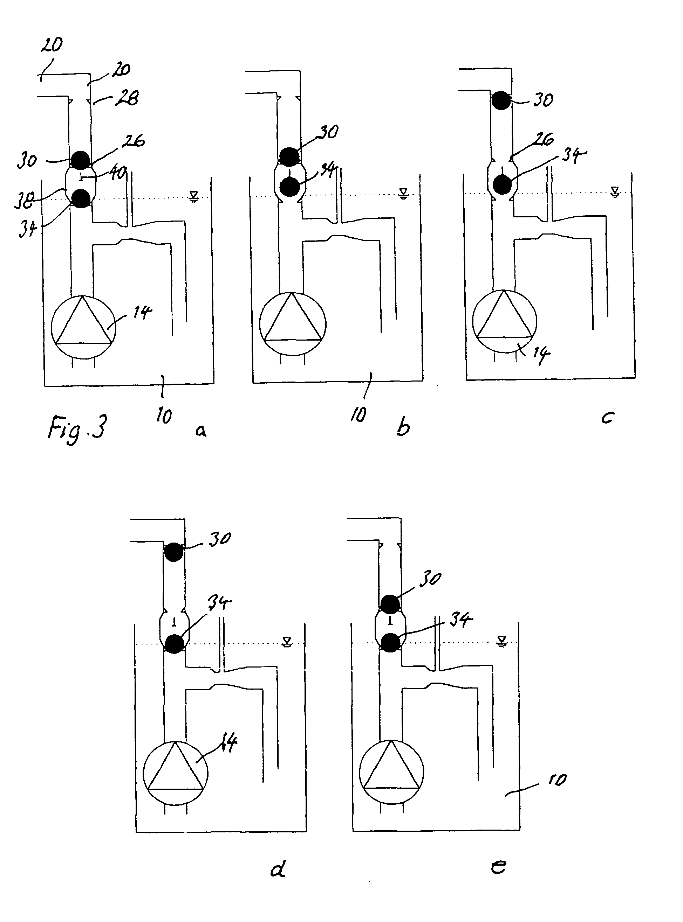

Fig. 3a bis 3e entspricht Fig. 2a bis 2c, mit dem Unterschied, dass gemäß Fig. 3a bis 3e das Rückschlagventil vor oder stromaufwärts der Ventilkugel 30 mit den beiden Ventilsitzen 26,28 angeordnet ist. Da im übrigen vollständige Übereinstimmung herrscht, werden die entsprechenden Bezugsziffern verwendet, die bereits in Fig. 2a bis 2c und zum Teil auch bereits in Fig. 1a und 1b eingesetzt worden sind.

Anschließend soll die Arbeitsweise der Ausführungsform gemäß Fig. 3a bis 3e erläutert werden.

Fig. 3a zeigt die Stellung, in der die Pumpe ausgeschaltet ist. Wird die Pumpe 14 eingeschaltet, so wird zunächst die Ventilkugel 34 des Rückschlagventils 32 von ihrem Ventilsitz 36 abgehoben (Fig. 3b). Jetzt kann der Wasserstrom in die Nebenleitung 20 eintreten, so dass die Ventilkugel 30 von ihrem unteren Ventilsitz 26 bis zu ihrem oberen Ventilsitz 28 angehoben wird. Während dieser Zeit strömt Wasser durch die Nebenleitung 20. Sobald die Ventilkugel 30 den oberen Ventilsitz 28 erreicht hat (Fig. 3c), wird der Wasserstrom in der Nebenleitung 20 unterbrochen. Die Ventilkugel 34 des Rückschlagventils 32 sinkt daher auf ihren Ventilsitz 36 zurück (Fig. 3d). Wenn die Pumpe ausgeschaltet wird, sinkt auch die Ventilkugel 30 auf ihren unteren Ventilsitz 26 zurück (Fig. 3e).

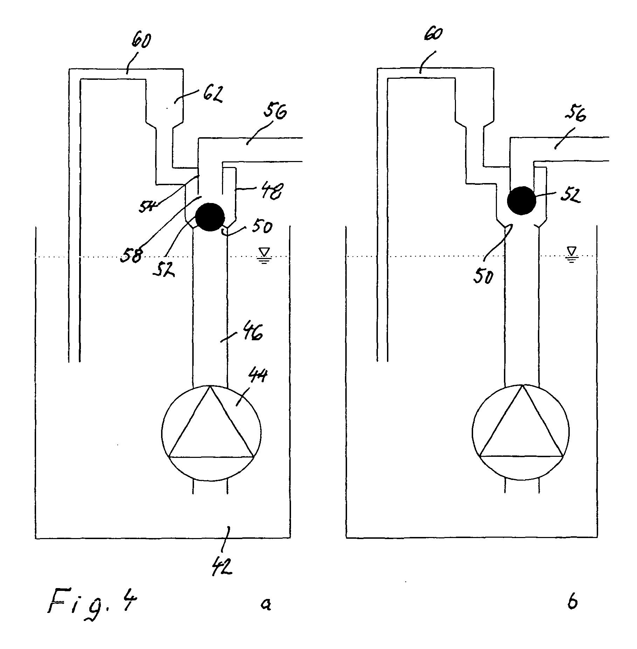

Fig. 4a und 4b zeigt eine Anordnung, die nach einem anderen Prinzip arbeitet als die bisher beschriebenen Ausführungsformen. In einer Klärkammer 42 befindet sich eine Pumpe 44, von der eine Pumpenausgangsleitung 46 in senkrecht aufsteigender Richtung ausgeht.

Im Anschluß an einen unteren, nicht bezeichneten ersten Abschnitt der Pumpenausgangsleitung 26 geht diese in einen erweiterten Abschnitt 48 über, und am Übergang zwischen dem unteren Abschnitt und dem oberen, erweiterten Abschnitt 48 befindet sich ein Ventilsitz 50, auf dem in Fig. 4a eine Ventilkugel 52 ruht. Konzentrisch innerhalb dieses erweiterten Abschnitts 48 befindet sich der Einlaß 54 der Nebenleitung 56, die ihrer Funktion nach der Nebenleitung 20 gemäß Fig. 1 entspricht. An diesem Einlaß 54 der Nebenleitung 56 befindet sich ein Ventilsitz 58. Dieser Ventilsitz 58 liegt dem unteren Ventilsitz 50 direkt gegenüber und ist koaxial zu diesem angeordnet.

Von dem erweiterten Abschnitt 48 der Pumpenausgangsleitung 46 zweigt nach der Ausführungsform gemäß Fig. 4a und 4b die Hauptleitung 60 ab, die der Hauptleitung 18 der zuvor beschriebenen Ausführungsformen entspricht. Die Hauptleitung 60 weist in einem aufsteigenden Abschnitt, der an den erweiterten Abschnitt 48 der Pumpenausgangsleitung 46 anschließt, einen Wasserspeicher 62 auf.

Anschließend soll die Wirkungsweise der Ausführungsform gemäß Fig. 4a und 4b beschrieben werden.

Fig. 4a zeigt die Stellung, in der die Pumpe 44 ausgeschaltet ist. Die Ventilkugel 52 liegt auf ihrem Ventilsitz 50. Wenn die Pumpe 44 eingeschaltet wird, wird die Ventilkugel 52 von dem unteren Ventilsitz 50 nach oben gegen den Ventilsitz 58 am Einlaß der Nebenleitung 56 angehoben. Die Nebenleitung 56 wird dadurch verschlossen. Das Wasser strömt durch die Hauptleitung 60. Wird nunmehr die Pumpe 44 ausgeschaltet, so sinkt die Ventilkugel 52 auf ihren unteren Ventilsitz 50 zurück. Die Anordnung wirkt insoweit als Rückschlagventil. Das in dem Wasserspeicher 62 gesammelte Wasser kann über die Hauptleitung aufgrund der gegebenen Höhenverhältnisse nicht ablaufen und strömt daher zurück in den erweiterten Abschnitt 48 der Pumpenausgangsleitung und von hier durch die Nebenleitung 56 ab. An dieser Stelle ist darauf hinzuweisen, dass insbesondere die Fig. 4a und 4b rein schematische Darstellungen sind. Es liegt auf der Hand, dass das Volumen des Wasserspeichers 62 und des erweiterten Abschnitts 48 sowie die Anordnung und Dimensionierung der Nebenleitung 56 so gewählt sein müssen, dass eine vorgegebene Menge Wasser über die Nebenleitung 56 abströmen kann.

## Patentansprüche

1. Biologische Klärvorrichtung mit einem Mehrkammer-Behälter mit Trennwänden, die den Behälter in wenigstens eine Belebtschlamm enthaltende Vorklärkammer und wenigstens eine Klärkammer unterteilen, sowie mit Pumpeinrichtungen (14,44) für den Transport und die Behandlung von Abwasser, wobei wenigstens einer Pumpeinrichtung (14,44) ein Verteiler (16,18,20;46,56.60) zur Unterteilung des Pumpenausstosses in wenigstens einen Hauptstrom und wenigstens einen Nebenstrom nachgeschaltet ist, **dadurch gekennzeichnet, dass** der Verteiler eine Hauptleitung (18,60) zur Leitung des Hauptstroms in die Klärkammer und eine Nebenleitung (20,56) zur Leitung des Nebenstroms in die Vorklärkammer umfaßt, die von einer Pumpenausgangsleitung (16,46) ausgehen, welche Nebenleitung (20,56) eine Kugelventilanordnung umfaßt, mit zwei in einem ansteigenden Abschnitt der Nebenleitung (20,56) im Abstand zueinander angeordneten Ventilsitzen (26,28) und einer Ventilkugel (30), die zwischen den beiden Ventilsitzen (26,28) aufwärts und abwärts beweglich ist.

2. Klärvorrichtung nach Anspruch 1, **dadurch gekennzeichnet, dass** der Anordnung aus Ventilsitzen (26,28) und Ventilkugel (30) in der Nebenleitung (20) ein Rückschlagventil (32) vorgeschaltet ist.

3. Klärvorrichtung nach Anspruch 1, **dadurch gekennzeichnet, dass** der Anordnung aus Ventilsitzen (26,28) und Ventilkugel (30) in der Nebenleitung (20) ein Rückschlagventil (32) nachgeschaltet ist.

4. Klärvorrichtung nach Anspruch 1, **dadurch gekennzeichnet, dass** der Verteiler eine Hauptleitung (60) und eine Nebenleitung (56) umfaßt, und dass in der Hauptleitung (60) in einer erhöhten Position ein Wasserspeicher (62) vorgesehen ist, dessen Wasser bei Beendigung des Pumpenbetriebs zurückströmt und in die Nebenleitung gelangt.

5. Klärvorrichtung nach Anspruch 4, **dadurch gekennzeichnet, dass** eine zwischen einem Ventilsitz (50) an der Pumpenausgangsleitung (46) und einem Ventilsitz (58) am Einlaß der Nebenleitung (56) bewegliche Ventilkugel (52) vorgesehen ist, die bei Pumpenbetrieb von dem Ventilsitz (50) am Ende der Pumpenausgangsleitung abgehoben und durch den Wasserstrom gegen den Ventilsitz (58) am Einlaß der Nebenleitung (56) gedrückt wird, dagegen beim Abschalten der Pumpe (44) auf den Ventilsitz (50) am Ende der Pumpenausgangsleitung (46) zurücksinkt und damit den Einlaß zur Nebenleitung (56) freigibt.

6. Klärvorrichtung nach Anspruch 5, **dadurch gekennzeichnet, dass** die Nebenleitung (56) in ihrem Einlaßbereich konzentrisch innerhalb eines erweiterten Abschnitts (48) der Pumpenausgangsleitung (46) liegt.

## Claims

1. Biological purification device having a multi-chamber container with partition walls which subdivide the container into at least one pre-purification chamber which contains activated sludge and at least one purification chamber, and having pumping devices (14, 44) for the transport and the handling of waste water, a distributor (16, 18, 20; 46, 56, 60) for subdividing the pump output into at least one main flow and at least one auxiliary flow being arranged downstream of at least one pumping device (14, 44), **characterised in that** the distributor comprises a main line (18, 60) for directing the main flow into the purification chamber and an auxiliary line (20, 56) for directing the auxiliary flow into the pre-purification chamber which extend from a pump output line (16, 46), which auxiliary line (20, 56) comprises a ball valve arrangement with two valve seats (26, 28) which are arranged with mutual spacing in an ascending portion of the auxiliary line (20, 56) and a valve ball (30) which can be moved up and down between the two valve seats (26, 28).

2. Purification device according to claim 1, **characterised in that** a non-return valve (32) is arranged upstream of the arrangement comprising valve seats (26, 28) and a valve ball (30) in the auxiliary line (20).

3. Purification device according to claim 1, **characterised in that** a non-return valve (32) is arranged downstream of the arrangement comprising valve seats (26, 28) and a valve ball (30) in the auxiliary line (20).

4. Purification device according to claim 1, **characterised in that** the distributor comprises a main line (60) and an auxiliary line (56) and **in that**, in the main line (60) in a raised position, there is provided a water store (62) whose water flows back at the end of the pumping operation and reaches the auxiliary line.

5. Purification device according to claim 4, **characterised in that** there is provided a valve ball (52) which can be moved between a valve seat (50) at the pump outlet line (46) and a valve seat (58) at the inlet of the auxiliary line (56) and which is raised from the valve seat (50) at the end of the pump outlet line during pumping operation and is pressed by the water flow against the valve seat (58) at the inlet of the auxiliary line (56) but which, when the pump (44) is switched off, falls back onto the valve seat (50) at the end of the pump outlet line (46) and consequently opens the inlet to the auxiliary line (56).

6. Purification device according to claim 5, **characterised in that** the auxiliary line (56) is located in the inlet region thereof concentrically within an expanded portion (48) of the pump outlet line (46).

## Revendications

1. Dispositif de clarification biologique comportant un réservoir à chambres multiples avec des parois de séparation qui divisent le réservoir en au moins une chambre de pré-clarification contenant au moins des boues activées et au moins une chambre de clarification, ainsi que des dispositifs de pompage (14, 44) pour le transport et le traitement d'eaux usées, dans lequel un distributeur (16, 18, 20 ; 46, 56, 60) est raccordé en aval d'au moins un dispositif de pompage (14, 44) de manière à diviser le débit de pompage en au moins un écoulement principal et au moins un écoulement secondaire, **caractérisé en ce que** le distributeur inclut une conduite principale (18, 60) pour diriger l'écoulement principal dans la chambre de clarification, et une conduite secondaire (20, 56) pour diriger l'écoulement secondaire dans la chambre de pré-clarification, lesquelles conduites partent d'une conduite de sortie de pompe (16, 46), ladite conduite secondaire (20, 56) inclut un agencement de clapet à bille comportant deux sièges de clapet (26, 28) agencés à distance l'un de l'autre dans un tronçon montant de la conduite secondaire (20, 56) et une bille de clapet (30) mobile vers le haut et vers le bas entre les deux sièges de clapet (26, 28).

2. Dispositif de clarification selon la revendication 1, **caractérisé en ce qu'**un clapet antiretour (32) est agencé en amont de l'agencement formé par les sièges de clapet (26, 28) et la bille de clapet (30) dans la conduite secondaire (20).

3. Dispositif de clarification selon la revendication 1, **caractérisé en ce qu'**un clapet antiretour (32) est agencé en aval de l'agencement formé par les sièges de clapet (26, 28) et la bille de clapet (30) dans la conduite secondaire (20).

4. Dispositif de clarification selon la revendication 1, **caractérisé en ce que** le distributeur inclut une conduite principale (60) et une conduite secondaire (56), et **en ce qu'**un réservoir d'eau (62) est prévu dans la conduite principale (60) dans une position surélevée, l'eau dudit réservoir refluant et parvenant dans la conduite secondaire lorsque les dispositifs de pompage sont arrêtés.

5. Dispositif de clarification selon la revendication 4, **caractérisé en ce qu'**une bille de clapet (52) mobile entre un siège de clapet (50) sur la conduite de sortie de pompe (46) et un siège de clapet (58) à l'entrée de la conduite secondaire (56) est prévue, laquelle bille est soulevée du siège de clapet (50) à l'extrémité de la conduite de sortie de pompe lorsque les dispositifs de pompage sont en marche, et est pressée par l'écoulement d'eau contre le siège de clapet (58) à l'entrée de la conduite secondaire (56), alors que lorsque la pompe (44) est arrêtée, la bille retombe sur le siège de clapet (50) à l'extrémité de la conduite de sortie de pompe (46), en libérant ainsi l'entrée de la conduite secondaire (56).

6. Dispositif de clarification selon la revendication 5, **caractérisé en ce que** la zone d'entrée de la conduite secondaire (56) se situe concentriquement à l'intérieur d'un tronçon élargi (48) de la conduite de sortie de pompe (46).
